# EUROPÄISCHE PATENTSCHRIFT

(11) **EP 0 263 069 B1**
(45) Veröffentlichungstag und Bekanntmachung des Hinweises auf die Patenterteilung: **28.07.1993**
(21) Anmeldenummer: 87810552.7
(22) Anmeldetag: 23.09.1987
(51) Int. Cl.: B01D 19/04

(54) **Entschäumungsmittel für wässerige Systeme und ihre Verwendung**
Anti-foam agent for aqueous systems and its use
Antimousse pour systèmes aqueux et son utilisation

(30) Priorität: 29.09.1986 CH 3889/86
(43) Veröffentlichungstag der Anmeldung: 06.04.1988
(73) Patentinhaber: CIBA-GEIGY AG, 4002 Basel (CH)
(72) Erfinder: Abel, Heinz, CH-4153 Reinach (CH); Guth, Christian, CH-4127 Birsfelden (CH); Berendt, Hans-Ulrich, CH-4123 Allschwil (CH)

(56) Entgegenhaltungen:
- EP-A- 0 035 702
- EP-A- 0 207 002
- DE-A- 2 654 739
- DE-A- 2 745 583
- DE-A- 2 943 754
- DE-A- 3 242 202
- DE-A- 3 505 742
- DE-B- 2 705 561
- US-A- 2 748 086
- US-A- 3 235 499
- US-A- 3 657 136
- US-A- 3 697 442
- US-A- 3 730 907
- US-A- 3 756 918
- US-A- 4 021 365

## Beschreibung

Gegenstand der vorliegenden Erfindung sind Entschäumungsmittel für wässrige Systeme, verdünnte Entschäumungsmittelzubereitungen sowie ein Verfahren zum Entschäumen von wässrigen Systemen.

Es ist bereits bekannt wässrige Systeme mit Entschäumungsmitteln, z.B. Siliconölen zu behandeln um eine Schaumbildung möglichst weitgehend zu verhindern oder entstandenen Schaum wieder zu beseitigen (vgl. z.B. die US-A-4 071 468). Solche Antischaummittel auf der Basis von Silikonölemulsionen sind gegen hohe Scherkräfte wie sie während der Färbung, besonders Jet-Färbung von Fasernsubstraten vorkommen, empfindlich. Dabei wird das Silikonöl aufgrund seines höheren spezifischen Gewichtes ausgeschieden, was zur Bildung von Flecken auf dem Substrat führen kann. Um die Wirksamkeit zu erhalten muss das Antischaummittel ständig nachdosiert werden, was sich auf die Wirtschaftlichkeit des Färbeverfahrens negativ auswirkt. Aus der DE-A-2,943,754 sind Schaumdämpfungsmittel für wässrige Systeme bekannt, die ein Fettsäuresalz eines mehrwertigen Metalls, eines anionischen Tensids oder eines nichtionischen Alkohol- oder Alkylphenol-alkylenoxidumsetzungsproduktes, eines aliphatischen Alkohols oder eines Gemisches dieser Alkohole und eines hydrophoben organischen - vom aliphatischen Alkohol verschiedenen - Lösungsmittels oder Lösungsmittelgemisches enthalten. Aus der EP-B-035702 sind auch Entschäumungsmittel bekannt geworden, welche kein Siliconöl enthalten. Diese Entschäumungsmittel sind aber ungenügend lagerstabil und ergeben wenig stabile Anwendungsflotten.

Es wurden nun Entschäumungsmittel gefunden, welche diese Nachteile nicht aufweisen.

Gegenstand der vorliegenden Erfindung sind daher Entschäumungsmittel für wässrige Systeme, welche dadurch gekennzeichnet sind, dass sie
(1) 0,5 bis 5 Gew.-% eines Erdalkalimetallsalzes einer C₁₀-C₂₄-Fettsäure,
(2) 25 bis 45 Gew.-% eines Dialkylesters einer ungesättigten Dicarbonsäure,
(3) 25 bis 45 Gew.-% eines Mineralöls,
(4) 5 bis 15 Gew.% eines nichtionogenen Emulgators
(5) bis 15 Gew.% eines anionischen Emulgators und
(6) 0,5 bis 3,0 Gew.% eines Alkylendiamids
enthalten.

Als Komponente (1) kommen Salze des Calciums, Strontiums, Bariums und vorzugsweise des Magnesiums in Betracht. Besonders geeignet sind die Magnesiumsalze einer C₁₈-C₂₄-Fettsäure besonders der Stearin- und Behensäure und vorzugsweise das Magnesiumsalz der Stearinsäure.

Als Komponente (2) kommen Dialkylester von ethylenisch ungesättigten Dicarbonsäuren mit 2 bis 12 C-Atomen je Alkylteil in Betracht. Die Dialkylester werden in an sich bekannter Weise durch Umsetzung einer Dicarbonsäure wie Malein- oder Fumarsäure oder deren Anhydrid mit einem Alkanol mit 2 bis 12 C-Atomen, wie Aethanol, Propanol, Isopropanol, Butanol und dessen Isomere, Amylalkohol und dessen Isomere, n-Hexylalkohol, n-Octylalkohol, Caprylalkohol, 2-Ethylhexanol, 2-Butylhexanol, Trimethylhexanol, n-Decylalkohol und Laurylalkohol hergestellt. Bevorzugt ist das Umsetzungsprodukt aus Maleinsäure bzw. deren Anhydrid mit 2-Ethylhexanol.

Als Komponente (3) können handelsübliche Kohlenwasserstoffgemische verwendet werden, z.B. Paraffinöl oder solche aus 45 bis 70 Gew.% Paraffinen, 25 bis 45 Gew.% Naphthenen und 5 bis 10 Gew.% Aromaten. Solche Gemische weisen in der Regel einen Flammpunkt oberhalb 100°C, einen sogenannten "Pourpoint" von -3 bis -60°C und einen Anilinpunkt von 70 bis 110°C. Beispiele solcher handelsüblicher Kohlenwasserstoffgemische sind die Mineralöle ESSO 301®, ESSO 302®, ESSO 303®, ESSO 304®, ESSO 310®, ESSO 311®, ESSO 312® und Shell Oil L 6189®.

Als Komponente (4) kommen Alkohol- oder Alkylphenolalkylenoxidumsetzungsprodukte, z.B. Alkylenoxidumsetzungsprodukte von aliphatischen Alkoholen mit 4 bis 22 Kohlenstoffatomen, die bis zu 80 Mol Ethylenoxid und/oder Propylenoxid angelagert enthalten, in Betracht.

Die Alkohole können vorzugsweise 4 bis 18 Kohlenstoffatome enthalten, sie können gesättigt, verzweigt oder geradkettig sein und können allein oder im Gemisch eingesetzt werden. Alkohole mit verzweigten Ketten sind bevorzugt.

Es können natürliche Alkohole, wie z.B. Myristylalkohol, Cetyalkohol, Stearylalkohol, Oleylalkohol, Arachidylalkohol oder Behenylalkohol oder synthetische Alkohole, wie insbesondere Butanol, 2-Aethylhexanol, Amylalkohol, n-Hexanol, ferner Triäthylhexanol, Trimethylnonylalkohol oder die Alfole (Handelsname - Continental Oil Company) verwendet werden. Bei den Alfolen handelt es sich um lineare primäre Alkohole. Die Nummer hinter dem Namen gibt die durchschnittliche Kohlenstoffzahl des Alkohols an; so ist z.B. Alfol (1218) ein Gemisch aus Decyl-, Dodecyl-, Tetradecyl-, Hexadecyl- und Octadecylalkohol. Weitere Vertreter sind Alfol (810), (1014), (12), (16), (18), (2022).

Bevorzugte Aethylenoxid-Alkohol-Umsetzungsprodukte können z.B. durch die Formel

(1) R₃O(CH₂CH₂O)ₛH

dargestellt werden, worin R₃ ein gesättigter oder ungesättigter Kohlenwasserstoffrest, vorzugsweise ein Alkyl- oder Alkenylrest mit 8 bis 18 Kohlenstoffatomen und s eine ganze Zahl von 1 bis 80, vorzugsweise von 1 bis 30 ist.

Als Komponente (4) kommen ferner Umsetzungsprodukte aus Aethylenoxid und/oder 1,2-Propylenoxid und Alkylphenolen mit 4 bis 12 Kohlenstoffatomen im Alkylteil, wobei das Phenol ein oder mehrere Alkylsubstituenten enthalten kann, in Betracht. Vorzugsweise entsprechen diese Verbindungen der Formel 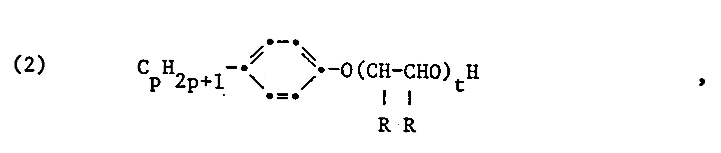
worin R Wasserstoff oder höchstens einer der beiden Reste R Methyl, p eine Zahl von 4 bis 12, vorzugsweise 8 bis 9, und t eine Zahl von 1 bis 60, insbesondere von 1 bis 20 und vorzugsweise 1 bis 6 ist.

Gegebenenfalls können diese Alkohol-Alkylphenol-Aethylenoxid/1,2-Propylenoxid-Addukte noch kleinere Anteile von Blockpolymeren aus den genannten Alkylenoxiden enthalten.

Weitere Umsetzungsprodukte, die als Komponente (4) in Betracht kommen, sind Polyoxyethylenderivate der Fettsäureester der Ether des Sorbitans mit 4 Mol Polyethylenglykol, z.B. das Laurat, Palmitat, Stearat, Tristearat, Oleat und Trioleat der genannten Ether wie die Tween-Marken der Atlas Chemicals Division. Bevorzugt ist das Tristearat des Ethers des Sorbitans mit 4 Mol des Polyethylenglykols der Formel

H(CH₂CH₂)₆₅OH

.

Als Komponente (5) sind veresterte Alkylenoxidaddukte, wie z.B. saure Estergruppen von anorganischen oder organischen Säuren enthaltende Anlagerungsprodukte von Alkylenoxiden, besonders Aethylenoxid und/oder Propylenoxid, an aliphatische, insgesamt mindestens 8 Kohlenstoffatome aufweisende organische Hydroxyl-, Carboxyl- gegebenenfalls auch Amino-oder Amidoverbindungen bzw. Mischungen dieser Verbindungen. Diese sauren Ester können als freie Säuren oder als Salze z.B. Alkalimetall-Erdalkalimetall-, Ammonium- oder Aminsalze vorliegen.

Die Herstellung dieser anionischen Tenside erfolgt nach bekannten Methoden, indem man an die genannten organischen Verbindungen mindestens 1 Mol vorzugsweise mehr als 1 Mol z.B. 2 bis 60 Mol Aethylenoxid oder alternierend in beliebiger Reihenfolge Aethylenoxid und Propylenoxid anlagert und anschliessend die Anlagerungsprodukte veräthert bzw. verestert und gegebenenfalls die Aether bzw. die Ester in ihre Salze überführt. Als Ausgangsstoffe kommen z.B. höhere Fettalkohole, d.h. Alkanole oder Alkenole mit 8 bis 22 Kohlenstoffatomen, alicyclische Alkohole, Phenylphenole, Alkylphenole mit einem oder mehreren Alkylsubstituenten, der bzw. die zusammen mindestens 10 Kohlenstoffatome aufweisen oder Fettsäuren mit 8 bis 22 Kohlenstoffatomen in Betracht.

Besonders geeignete anionische Tenside entsprechen der Formel 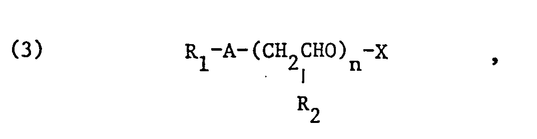
worin R₁ ein aliphatischer Kohlenwasserstoffrest mit 8 bis 22 Kohlenstoffatomen oder ein cycloaliphatischer, aromatischer oder aliphatischaromatischer Kohlenwasserstoffrest mit 10 bis 22 Kohlenstoffatomen, R₂ Wasserstoff oder Methyl A -O- oder 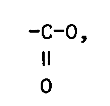
X der Säurerest einer anorganischen, Sauerstoff enthaltenden Säure, der Säurerest einer mehrbasischen Carbonsäure oder ein Carboxylalkylrest und n eine Zahl von 1 bis 50 ist.

Der Rest R₁-A- in den Verbindungen der Formel (3) leitet sich z.B. von höheren Alkoholen wie Decyl-, Lauryl-, Tridecyl-, Myristyl-, Cetyl-, Stearyl-, Oleyl-, Arachidyl- oder Behenylalkohol ab; ferner von alicyclischen Alkoholen, wie Hydroabietylalkohol; von Fettsäuren, wie Capryl-, Caprin-, Laurin-, Myristin-, Palmitin-, Stearin-, Arachin-, Behen-, Kokosfett- (C₈-C₁₈), Decen-, Dodecen-, Tetradecen-, Hexadecen-, Oel-, Linol-, Linolen-, Eikosen-, Dokosen- oder Clupanodonsäure; von Alkylphenolen, wie Butyl-, Hexyl-, n-Octyl-, n-Nonyl-, p-tert. Octyl-, p-tert. Nonyl-, Decyl-, Dodecyl-, Tetradecyl- oder Hexadecylphenol oder von Arylphenolen, wie den o- oder p-Phenylphenolen. Bevorzugt sind Reste mit 10 bis 18 Kohlenstoffatomen, insbesondere solche, die sich von den Alkylphenolen ableiten.

Der Säurerest X ist in der Regel der Säurerest einer mehrbasischen, insbesondere niedermolekularen Mono- oder Dicarbonsäure wie z.B. von Maleinsäure, Malonsäure, Bernteinsäure oder Sulfobernsteinsäure, oder ist ein Carboxyalkylrest, insbesondere ein Carboxymethylrest (abgeleitet insbesondere von Chloressigsäure) und ist über eine Aether- oder Esterbrücke mit dem Rest R₁-A-(CH₂CHR₁O)ₘ-verbunden. Insbesondere leitet sich X jedoch von anorganischen mehrbasischen Säuren ab, wie Orthophosphorsäure und Schwefelsäure. Der Säurerest X liegt vorzugsweise in Salzform, d.h. z.B. als Alkalimetall-, Ammonium- oder Aminsalz, vor.

Beispiele für solche Salze sind Natrium-, Kalzium-, Ammonium-, Trimethylamin-, Aethanolamin-, Diäthanolamin- oder Triäthanolaminsalze. Bei den Alkylenoxydeinheiten (̵H₂CHR₂O)̵ der Formel (3) handelt es sich in der Regel um Aethylenoxid und 1,2-Propylenoxideinheiten, letztere befinden sich vorzugsweise im Gemisch mit Aethylenoxideinheiten in den Verbindungen der Formel (3).

Von besonderem Interesse sind nun die anionischen Verbindungen der Formel

(4) R₃O (CH₂CH₂O)ₙ - X

,

worin R₃ ein gesättigter oder ungesättigter Kohlenwasserstoffrest mit 8 bis 22 Kohlenstoffatomen, o-Phenylphenyl oder Alkylphenyl mit 4 bis 12 Kohlenstoffatomen im Alkylteil ist, und X und n die angegebenen Bedeutungen haben.

Von den Verbindungen, die sich von Alkylphenol-Aethylenoxidaddukten ableiten, sind ferner solche der Formeln 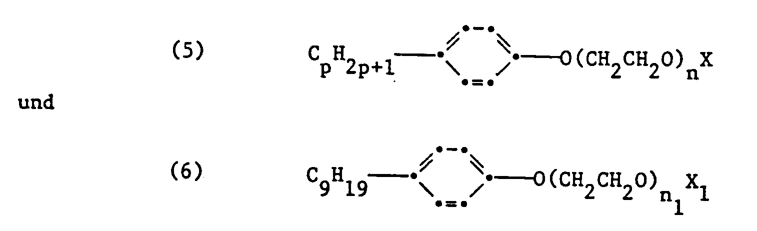
worin p eine Zahl von 4 bis 12, n eine ganze Zahl von 1 bis 20, n₁ eine ganze Zahl von 1 bis 10, X₁ ein Phosphorsäurerest der gegebenenfalls in Salzform vorliegt und X die angegebene Bedeutung hat, besonders bevorzugt.

Als Komponente (6) sind Alkylendiamide der Formel

R₃-NH-R₄-NH-R₃

worin R₃ einen Alkanoylrest mit 14 bis 22 C-Atomen und R₄ einen Alkylenrest mit 2 bis 6 C-Atomen bedeuten, zu erwähnen.

Als Alkanoylreste R₃ kommen der Myristoyl-, Palmitoyl-, Arachinoyl-, Behenoyl- und vorzugsweise der Stearoylrest sowie Mischungen davon in Betracht.

R₄ ist vorzugsweise der Ethylenrest.

Bevorzugte Entschäumungsmittel enthalten
1 bis 3 Gew.% der Komponente (1)
35 bis 40 Gew.% der Komponente (2)
35 bis 40 Gew.% der Komponente (3)
10 bis 15 Gew.% der Komponente (4)
10 bis 15 Gew.% der Komponente (5) und
1 bis 2 Gew.% der Komponente (6)

Die erfindungsgemässen Entschäumungsmittel können dadurch hergestellt werden, dass man die Komponenten (1), (2), (3) und (6) unter Rühren bei Raumtemperatur mischt, das Gemisch unter ständigem Rühren auf Temperaturen von 50 bis 150°C, vorzugsweise 90 bis 120°C, während 10 bis 60 Minuten bis zur vollständigen Lösung erwärmt und nach Kühlung die Lösung in eine Vorlage bestehend aus den Komponenten (4) und (5) unter Rühren eintropft und danach auf Raumtemperatur unter Rühren abkühlen lässt, wobei man leicht viskose, gelbliche, lagerstabile Flüssigkeiten erhält.

Die erfindungsgemässen Entschäumungsmittel können in sauren oder alkalischen Zubereitungen (pH-Wert-Bereich etwa 1 bis 12) sowie in einem weiten Temperaturbereich, z.B. 20 bis 150°C, verwendet werden, ohne ihre Wirkung zu verlieren. Für die praktische Anwendung kann man sie unverdünnt oder nach Verdünnung mit organischen Lösungsmitteln oder Wasser in die wässrigen Systeme geben, wobei etwa 0,1 bis 10 g/l vorzugsweise (0,5 bis 5 g/l) eingesetzt werden können.

Gegebenenfalls kann man die erfindungsgemässen Entschäumungsmittel auch in Form verdünnter wässriger oder organischer Zubereitungen (Lösungen) einsetzen, z.B. als 1 bis 99 %ige wässrige Lösungen oder Lösungen in einem organischen Lösungsmittel, z.B. 2-Aethyl-n-Hexanol oder Toluol oder Lösungsmittelgemischen. Diese verdünnten Entschäumungsmittelzubereitungen erleichtern die Dosierung, z.B. beim Einsatz in Druckpasten oder Färbebädern.

Die erfindungsgemässen Entschäumungsmittel können in den verschiedensten Verfahren eingesetzt werden, in denen wässrige oder wasserhaltige Zubereitung verwendet werden, die leicht zum Schäumen neigen, wie z.B.
a) Färben von Wolle mit 1:1 oder 1:2-Metallkomplexfarbstoffen, Säure-oder Reaktivfarbstoffen; Auszieh- oder kontinuierliche Färbeverfahren für das Färben von synthetischen Polyamidfasern mit Säurefarbstoffen oder Dispersionsfarbstoffen; das Färben von Polyesterfasern mit Dispersionsfarbstoffen; das Färben von cellulosischen Fasern mit Reaktiv-Küpen-, Schwefel- und direktziehenden Farbstoffen; das Färben von Polyacrylnitrilfasern mit kationischen Farbstoffen;
b) Ausrüst-(Veredlungs)-verfahren für Textilmaterialien: Filz- und Schrumpffestmachen von Wolle oder Wolle enthaltenden Fasermischungen; Entschlichten von cellulosischen Fasersubstraten; Flammfest- und Knitterfestmachen von cellulosischen Fasermaterialien; Oel-, Wasser- und Schmutabweisendmachen von verschiedenen Fasersubstraten; Antistatisch-und Weichgriffigmachen von verschiedenen Fasersubstraten; optisches Aufhellen von verschiedenen Fasersubstraten und
c) Papierherstellung (Papierfasersuspensionen) und Papierausrüstung, insbesondere beim Leimen von Papier mit wässrigen Harzzubereitungen oder bei der Oberflächenbehandlung von Papier (Papierstreichmassen).

Werden die genannten Mittel in Färbe- und Ausrüstverfahren für Textilmaterialien eingesetzt, so wird eine gute Schaumdämpfung erreicht, auch wenn andere leicht schäumende Hilfsmittel (Tenside) mitverwendet werden.

In den nachfolgenden Beispielen sind die Prozente Gewichtsprozente.

### Herstellungsvorschriften

### Herstellungsvorschrift A: Komponente (2)

In einem Sulfierkolben mit Destillationsaufsatz, Rührer und Thermometer werden 49 g Maleinsäureanhydrid, 140 g 2-Ethylhexanol, 2 g Natriumhydrogensulfat und 0,2 g Hydrochinonmonomethylether vorgelegt, unter Rühren und Ueberleiten von Stickstoff auf 150°C erhitzt, wobei Wasser und überschüssiges 2-Ethylhexanol während 4 Stunden abdestilliert werden. Danach wird das Reaktionsgemisch bei 150°C während 30 Minuten unter Wasserstrahlvakuum gehalten, auf Raumtemperatur abgekühlt und das abgeschiedene Natriumhydrogensulfat abfiltriert. Man erhält 179 g des Esters als gelbliche, klare Flüssigkeit.

Aehnliche als Komponente (2) einsetzbare Ester erhält man, wenn in der Herstellungsvorschrift A bei sonst gleicher Arbeitsweise das Maleinsäureanhydrid und das 2-Ethylhexanol durch Maleinsäure bzw. Trimethylhexanol ersetzt werden.

### Herstellungsvorschrift B: Komponente (6)

In einem Reaktionskolben mit Rührer, Kühler, Tropftrichter, Thermometer und Gaseinleitungsrohr werden 1098 g Stearinsäure vorgelegt und geschmolzen. Unter Stickstoffatmosphäre wird auf 150°C aufgeheizt und dann innerhalb von 30 Minuten 130 g Ethylendiamin zugetropft, wobei Wasser abdestilliert wird. Man heizt das Reaktionsgemisch auf 174°C bis kein Destillat mehr ausgeschieden wird. Das Reaktionsgemisch wird auf 145°C agekühlt und auf ein Blech gegossen, erstarren gelassen und gemahlen. Man erhält ein hellbeiges Pulver vom Smp. 141-142°C.

Verwendet man, bei sonst gleicher Arbeitsweise, anstelle von Stearinsäure, das technische Gemisch von Stearinsäure und Palmitinsäure, so erhält man ein ähnliches als Komponente (6) einsetzbares Produkt. Aehnliche Produkte werden auch erhalten, wenn man im Molverhältnis 2 : 1 Behensäure mit Trimethylendiamin oder Hexamethylendiamin umsetzt.

Beispiel 1: In einem Rührgefäss werden unter Erwärmen und unter ständigem Rühren 150 g der gemäss Herstellungsvorschrift B erhaltenen Komponente (6) und 200 g Magnesiumstearat in 3700 g der gemäss Herstellungsvorschrift A erhaltenen Komponente (2) und 3550 g Mineralöl (z.B. Shell Oil L 6189®) gelöst. Nach dem vollständigen Lösen wird das Gemisch auf 45°C abgekühlt. Dem abgekühlten Gemisch werden unter Rühren bei 45°C, 1200 g eines nichtionischen Emulgators (z.B. Tween 65®) und 1200 g eines anionischen Emulgators (z.B. Phospholan PNP 9®) zugegeben und die Dispersion abkühlen gelassen. Man erhält eine gelbliche, dünnflüssige Dispersion.

Beispiel 2: In einem Rührgefäss werden unter Erwärmen auf 187°C und unter ständigem Rühren 160 g Trimethylen-dibehensäureamid und 200g Bariumlaurat in 3540 g Paraffinöl gelöst. Nach der vollständigen Lösung der Komponenten wird auf 120°C abgekühlt und danach werden 3700 g Fumarsäure-di-(2-ethylhexyl)ester, 1200 g eines nichtionischen Emulgators (z.B. Addukt von 35 Mol Ethylenoxid an 1 Mol p-Nonylphenol) und 1200 g eines anionischen Emulgators (z.B. das Ammoniumsalz des sauren Schwefelsäureesters des Adduktes von 2 Mol Ethylenoxid an 1 Mol p-Nonylphenol) eingerührt. Nach dem Abkühlen auf Zimmertemperatur erhält man ein bräunliche, trübe, lagerstabile Flüssigkeit.

Beispiel 3: In einem Rührgefäss werden unter Erwärmen auf 187°C und unter ständigem Rühren 160 g Hexamethylen-dibehensäureamid und 200 g Calciumlaurat in 3540 g Paraffinöl gelöst. Nach der vollständigen Lösung der Komponenten wird auf 120°C abgekühlt und danach werden 3700 g Citraconsäure-di-(2-ethylhexyl)ester, 1200 g eines nichtionischen Emulgators (z.B. Addukt von 35 Mol Ethylenoxid an 1 Mol p-Nonylphenol) und 1200 g eines anionischen Emulgators (z.B. Laurytriglykolethersulfat) eingerührt. Nach dem Abkühlen auf Zimmertemperatur erhält man eine bräunliche, trübe, lagerstabile Flüssigkeit.

Beispiel 4: In einem Rührgefäss werden unter Erwärmen auf 187°C und unter ständigem Rühren 160 g Trimethylen-dibehensäureamid und 200 g Calciumbehenat in 3540 g Paraffinöl gelöst. Nach der vollständigen Lösung der Komponenten wird auf 120°C abgekühlt und danach werden 3700 g Maleinsäure-di-trimethylhexylester, 1200 g eines nichtionischen Emulgators (z.B. Addukt von 100 Mol Ethylenoxid an 1 Mol p-Nonylphenol) und 1200 g eines anionischen Emulgators (z.B. das Natriumsalz des sauren Schwefelsäureesters des Adduktes von 10 mol Ethylenoxid an 1 Mol p-Nonylphenol) eingerührt. Nach dem Abkühlen auf Zimmertemperatur erhält man eine bräunliche, trübe, lagerstabile Flüssigkeit.

Beispiel 5: Auf einem Kurzflotten-Jet werden 100 kg Baumwolltricot in 600 Liter entionisiertem Wasser bei 40°C eingenetzt. In die Flotte gibt man dann 36 kg Natriumchlorid, 5 kg des Handels-Farbstoffes der Formel 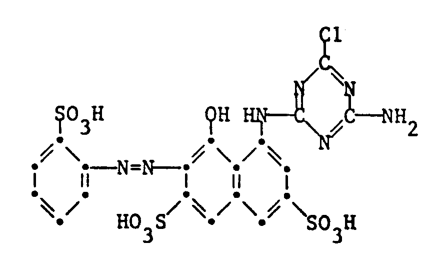
0,6 kg des Adduktes von 9 Mol Ethylenoxid an 1 Mol p-Nonylphenol sowie 0,5 kg einer der Emulsionen gemäss den Beispielen 1 bis 4. Man färbt das Gewebe auf dem Kurzflotten-Jet während 45 Min. bei 40°C. Dann erfolgt der Zusatz von 0,6 kg kalziniertem Natriumcarbonat und nach weiteren 5 Min. von 1,2 kg einer wässrigen 46%igen Natriumhydroxydlösung. Dann wird das Tricot während weiteren 40 Min. gefärbt, anschliessend gespült und nachgewaschen. Es resultiert eine echte, egale Rotfärbung des Tricots. Während des Färbeprozesses tritt keine Störung des Warenlaufes auf. Eine Schaumbildung ist nicht festzustellen. Färbt man in gleicher Weise, jedoch ohne Zusatz der Emulsion gemäss einem der Beispiele 1 bis 4 so tritt starkes Schäumen und gegebenenfalls eine Störung im Warenlauf ein.

Beispiel 6: In einem Muff-Färbeapparat werden 100 kg eines Garnes aus Polyäthylenglykolterephthalat in 1200 Liter Wasser auf 60°C erwärmt. Hierauf werden folgende Zusätze der Flotte zugegeben:
2400 g Ammoniumsulfat
2000 g einer 70 %igen, wässrigen Lösung des Ammoniumsalzes des sauren Schwefelsäureesters eines Kondensationsproduktes aus Glycerin und Propylenoxyd mit einem Molekulargewicht von 4200
450 g der Dispersion gemäss Beispiel 1
3700 g eines Handels-Farbstoffes der Formel 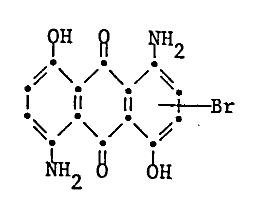
Man stellt das Färbebad mit 85 %iger Ameisensäure auf pH 5 ein und erwärmt es während 45 Minuten auf 130°C, worauf das Garn während 60 Minuten bei dieser Temperatur gefärbt wird. Anschliessend wird das Bad abgekühlt und das gefärbte Garn gespült und getrocknet. Man erhält eine farbstarke, egale und reibechte blaue Färbung des so gefärbten Garnes. Das Färbebad, das Ueberlaufgefäss und die Muffs werden durch den Zusatz der Emulsion gemäss Beispiel 1 vollständig entlüftet. Arbeitet man ohne diesen Zusatz so kommt es zu einem Lufteinschluss in den Muffs und zu weniger gefärbten Garnkreuzungsstellen.

Beispiel 7: 100 kg eines Gewebes aus 50 % Baumwolle und 50 % Polyethylenglykolterephthalat werden in einer HT (Hochtemperatur)-Haspelkufe mit 3000 T einer wässrigen Flotte, die
54 g eines Handels-Farbstoffes der Formel 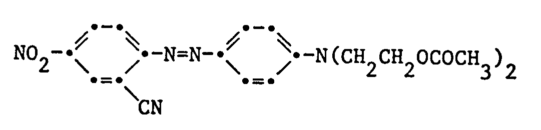
27 g eines Handels-Farbstoffes der Formel 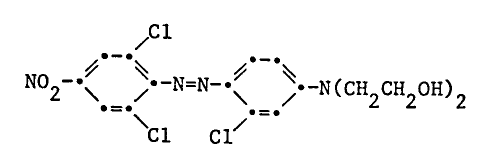
130 g eines Handels-Farbstoffes der Formel 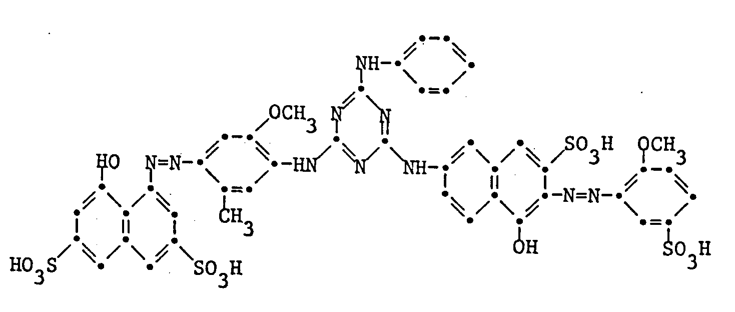
10 g eines Handels-Farbstoffes der Formel 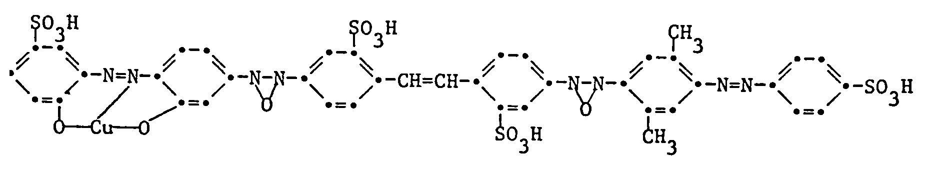
3000 g eines Gemisches aus
16,5 % Phenylbenzoat
38,5 % 2-Methylphenylbenzoat
8 % Ethylenglykol
17 % Isopropanol
2 % Ethanolamin
1,5 % Pineoil und
16,5 % sauren Phosphorsäureester des Adduktes aus 1 Mol p-Nonylphenol und 10 Mol Aethylenoxyd,
6000 g Ammoniumsulfat und
700 g der Dispersion gemäss einem der Beispiele 1 bis 4 enthält und einen pH-Wert von 5,6 aufweist, während 20 Minuten bei 40°C behandelt. Danach fügt man der Flotte 10 kg Natriumsulfat zu und erhitzt die Flotte während 40 Minuten auf 115°C. Man färbt das Gewebe während 30 Minuten bei dieser Temperatur und kühlt dann das Bad ab. Das gefärbte Gewebe wird gespült und getrocknet.

Durch die Zugabe der Emulsion gemäss einem der Beispiele 1 bis 4 ist ein schaumfreies Färben gewährleistet. Das Gewebe neigt in der Haspelkufe nicht zum Schwimmen, wodurch eine sehr egale Färbung ermöglicht wird.

Beispiel 8: In einem Zirkulationsapparat wird eine Kreuzspule aus 70 g Baumwolle bei 30°C in 500 ml Wasser eingenetzt. Hierauf werden zur Flotte folgende Zusätze gegeben:
12 ml einer wässrigen 30 %igen Natriumhydroxydlösung,
4,5 g Natriumhydrosulfit
1,0 g eines Benzimidazol-Fettsäurekondensates
0,3 g der Dispersion gemäss einem der Beispiele 1 bis 4
0,5 g eines Küpenfarbstoffes bestehend aus einer Mischung von Vat. Blue 4 C.I. 69800 und Vat. Blue 6 C.I. 69825 (1:3), welche mit Wasser vordispergiert worden ist.

Nach der gleichmässigen Verteilung der Zusätze wird die Färbeflotte im Verlauf von 30 Minuten auf 60°C erwärmt und die Baumwolle 60 Minuten bei dieser Temperatur gefärbt. Anschliessend wird das Färbegut wie üblich oxidiert, geseift, gespült und getrocknet. Man erhält eine gleichmässige und echte blaue Färbung der so gefärbten Baumwolle.

Während des Färbevorganges tritt kein störender Schaum auf, was bei gleicher Arbeitsweise ohne Emulsion gemäss Beispiel 1 der Fall ist.

Beispiel 9: In einem Strangfärbeapparat werden 100 kg Wollcablegarn in 3000 Liter Wasser wie folgt gefärbt:
Man erwärmt die Färbeflotte auf 40°C und gibt dann
2000 g Ammoniumsulfat
2000 g einer 80 %igen, wässrigen Essigsäure
1500 g eines Gemisches aus 1 Teil eines mit Dimethylsulfat quaternierten Adduktes aus 1 Mol Fettsäure (technisches Säuregemisch mit 18 bis 22 Kohlenstoffatomen) und 30 Mol Aethylenoxid und 3 Teilen eines mit Sulfaminsäure vernetzten Adduktes aus 1 Mol Talgfettsäureamid und 16 Mol Aethylenoxid
500 g der Dispersion gemäss einem der Beispiele 1 bis 4.

Man führt dann den Materialträger in den Färbeapparat ein. Die Flottenrichtung wird jeweils nach 30 Minuten gewechselt. Es erfolgt dann der Zusatz des gelösten Farbstoffes und zwar 2000 g des 1:2-Chrommischkomplexes mit je einem Handels-Farbstoff der Formeln 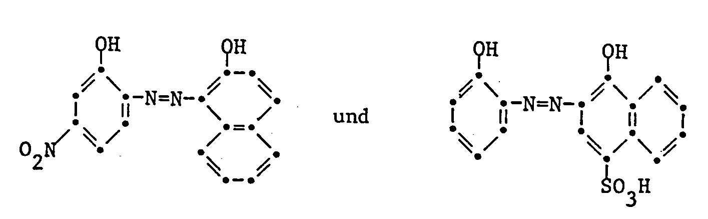
und 2000 g des Handels-Farbstoffes der Formel 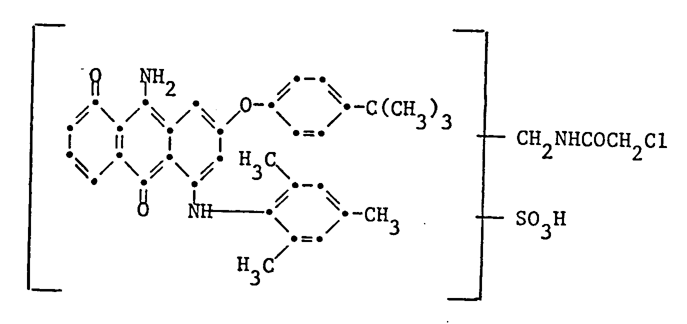
Man erwärmt dann die Flotte im Verlauf von 40 Minuten auf 100°C und hält diese Temperatur während 30 Minuten ein. Dann wird die Flotte abgekühlt und das Gewebe gespült, entwässert und getrocknet. Es resultiert eine egale Färbung. Durch die entlüftende und entschäumende Wirkung der Emulsion gemäss einem der Beispiele 1 bis 4 bleibt das Färbesystem vollständig schaumfrei.

Beispiel 10: In einem Strangfärbeapparat werden 100 kg Polyacrylnitril-Hochbauschgarn in 2000 l Wasser zunächst bei 90°C geschrumpft, dann auf 60°C abgekühlt. Dann gibt man die folgenden Komponenten in die Flotte:
1,5 kg des Handels-Farbstoffes der Formel 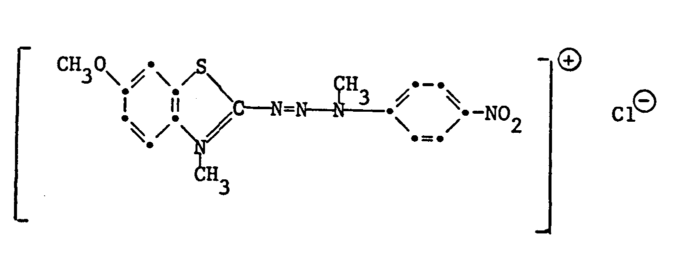
0,13 kg des Farbstoffes der Formel 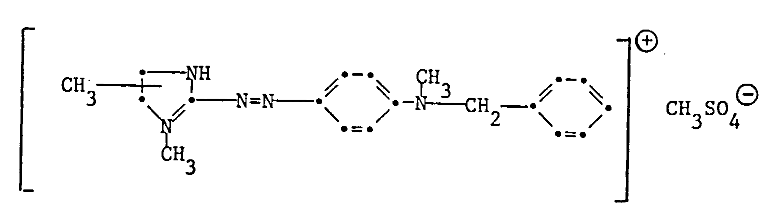
0,5 kg des Farbstoffes der Formel 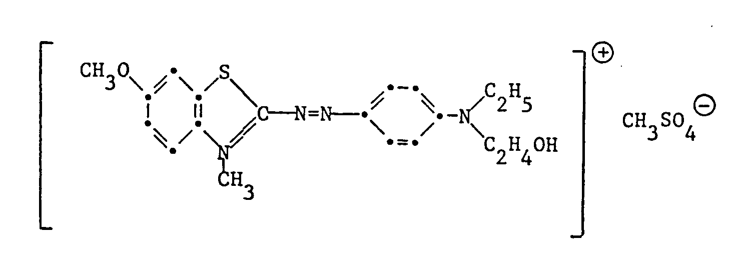
0,87 kg eines kationischen Retarders,
2 kg Essigsäure (80 %), 10 kg Natriumsulfat (wasserfrei) und 0,6 kg der Dispersion gemäss Beispiel 1. Nachdem alle Zusätze gleichmässig verteilt sind, wird in 45 Minuten auf Kochtemperatur erhitzt und 60 Minuten bei Kochtemperatur gefärbt. Anschliessend wird abgekühlt, gespült entwässert und getrocknet. Das Garn ist egal und echt gefärbt. Färbt man ohne den Zusatz der Emulsion gemäss Beispiel 1, so entstehen infolge von Kanalbildung und Lufteinschlüssen fleckige Färbungen.

Beispiel 11: In einem Entschlichtungsbad aus Wasser von 10° dH (deutsche Härte) werden pro Liter
4 g α-Amylase
3 g Natriumchlorid und
1 g des Adduktes von 9 Mol Ethylenoxid an 1 Mol p-Nonylphenol
zugesetzt. Die Flotte wird dann gemäss DIN 53 902 auf Schaumbildung geprüft, wobei sie stark schäumt.

In diese Flotte werden nun 0,5 g/l der Dispersion gemäss Beispiel 1 eingetragen und sie erneut auf Schaumbildung geprüft, wobei sich eine viel kleinere Schaummenge als bei der ursprünglichen Flotte bildet.

Beispiel 12: In ein Bleichbad aus Wasser 5° dH werden pro Liter
1 g eines wässerigen Netzmittel enthaltend 31,9 % Pentadecan-1-sulfonsäure-Na-salz und 10,4 % des Adduktes von 4 Mol Ethylenoxid an 1 Mol eines C₉₋₁₁-Alkanols,
0,2 g Magnesiumsulfat-Heptahydrat,
2 g festes Natriumhydroxid und
5 ml 35 %iges Wasserstoffperoxid
eingetragen. Die Flotte wird dann gemäss DIN 53902 auf Schaumbildung geprüft, wobei sie stark schäumt.

In diese Flotte werden nun 0,5 g/l der Dispersion gemäss Beispiel 1 eingegeben und sie erneut auf Schaumbildung geprüft, wobei sich eine viel kleinere Schaummenge als bei der ursprünglichen Flotte bildet.

Beispiel 13: In die Flotte für eine Kontinue-Bleiche aus Wasser von 5° dH werden pro Liter
3 g eines wässrigen Netzmittels enthaltend 31,9 % Pentadecan-1-sulfonsäure-Na-salz und 10,4 % des Adduktes von 4 Mol Ethylenoxid an 1 Mol eines C₉₋₁₁-Alkanols,
4 g einer wässrigen Lösung enthaltend 8 % Natriumgluconat, 7,3 % Magnesiumchlorid-Hexahydrat und 11,7 % einer 60 %igen wässrigen Lösung eines Gemisches aus Oligomenren-Esterkondensaten der Formel 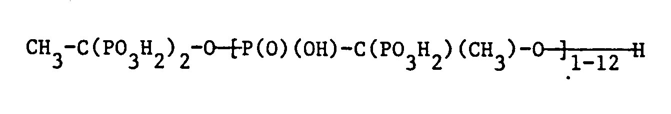
5 g festes Natriumhydroxid,
5 ml Natriumsilikat 38° Bé und
20 ml 35 %iges Wasserstoffperoxid
eingetragen. Die Flotte wird dann gemäss DIN 53902 auf Schaumbildung geprüft, wobei sie stark schäumt.

In diese Flotte wird nun 1 g/l der Dispersion gemäss Beispiel 1 eingegeben und sie erneut auf Schaumbildung geprüft, wobei sich eine kleinere Schaummenge als bei der ursprünglichen Flotte bildet.

Beispiel 14: 500 g eines Verdickungsmittels auf Natrium-alginat Basis werden mit 300 g einer 20%igen wässrigen Lösung aus einem zu Polyvinylalkohol hydrolysierten Polyvinylacetat mit einem Hydrolysegrad von ca. 72 Mol-% und 200 g deionisiertem Wasser zu einer Stammverdickung zusammengemischt.

Zu 600 g dieser Stammverdickung werden 100 g der Farbstoffkombination aus
20 g* des gelben Farbstoffes 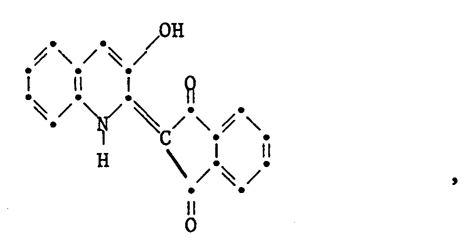
40 g* des roten Farbstoffes 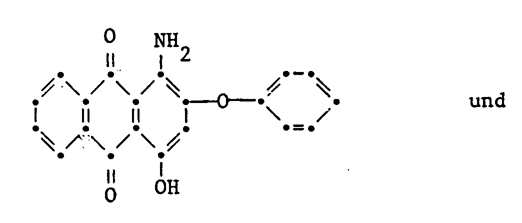
40 g* des blauen Farbstoffes 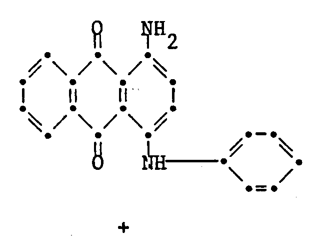 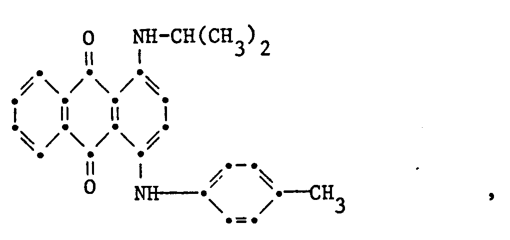
* beziehen sich auf Handelsprodukte

4 g der Emulsion gemäss Beispiel 1 und 296 g Wasser zugegeben und innig vermischt. Die als Emulsion vorliegende Druckpaste weist eine Viskosität, gemessen am Brookfield-Viskosimeter RVT mit Spindel 4 bei 20°C und 20 Umdrehungen/Minute, von 300 mPa.s auf.

Mit dieser Druckpaste wird mit einer Rotationssiebdruckmaschine ein Zwischenträger aus Papier bedruckt und bei 100°C während 8 Sekunden getrocknet.

Nun wird im Transferdruckverfahren die bedruckte Seite des Zwischenträgers mit einem Polyestergewebe eines Flächengewichtes von 100 g/m² in Kontakt gebracht, hierauf der Zwischenträger und das Gewebe während 30 Sekunden bei 210°C in einer Bügelpresse zusammengepresst, wobei der Farbstoff vom Zwischenträger auf das Gewebe transferiert.

Durch die Zugabe der Emulsion, gemäss Beispiel 1, resultiert eine gleichmässige Farbstoffauflage auf dem Papier, was einen egalen Transfer - Papier Polyester ermöglicht.

## Patentansprüche (Patentansprüche für folgende(n) Vertragsstaat(en): AT, BE, CH, DE, FR, GB, IT, LI, LU, NL)

1. Entschäumungsmittel für wässrige Systeme, dadurch gekennzeichnet, dass es
(1) 0,5 bis 5 Gew.-% eines Erdalkalimetallsalzes einer C₁₀-C₂₄-Fettsäure
(2) 25 bis 45 Gew.-% eines Dialkylesters einer ungesättigten Dicarbonsäure
(3) 25 bis 45 Gew.-% eines Mineralöls
(4) 5 bis 15 Gew.-% eines nichtionogenen Emulgators
(5) 5 bis 15 Gew.-% eines anionischen Emulgators und
(6) 0,5 bis 3 Gew.-% eines Alkylendiamids
enthält.

2. Entschäumungsmittel gemäss Anspruch 1, welches als Komponente (1) ein Magnesiumsalz einer C₁₈-C₂₄-Fettsäure enthält.

3. Entschäumungsmittel gemäss Anspruch 2, worin als Komponente (1) das Magnesiumsalz der Stearinsäure verwendet wird.

4. Entschäumungsmittel gemäss Anspruch 1, welches als Komponente (2) einen Dialkylester einer ethylenisch ungesättigten Dicarbonsäure mit 2 bis 12 C-Atomen je Alkylteil enthält.

5. Entschäumungsmittel gemäss einem der Ansprüche 1 bis 4, welches als Komponente (2) einen Dialkylester der Maleinsäure mit 8 oder 9 C-Atomen je Alkylteil enthält.

6. Entschäumungsmittel gemäss Anspruch 5, welches als Komponente (2) Maleinsäure-di-(2-ethyl-hexyl)-ester enthält.

7. Entschäumungsmittel gemäss Anspruch 6, welches als Komponente (4) ein Polyoxyethylenderivat der Fettsäureester der Ether des Sorbitans enthält.

8. Entschäumungsmittel gemäss Anspruch 6, welches als Komponente (5) ein Nonylphenolpolyglykoletherphosphat enthält.

9. Entschäumungsmittel gemäss Anspruch 8, welches als Komponente (6) das Reaktionsprodukt von Ethylendiamin mit Stearinsäure enthält.

10. Entschäumungsmittel gemäss einem der Ansprüche 1 bis 9, welches
1 bis 3 Gew.-% der Komponente (1),
35 bis 40 Gew.-% der Komponente (2),
35 bis 40 Gew.-% der Komponente (3),
10 bis 15 Gew.-% der Komponente (4),
10 bis 15 Gew.-% der Komponente (5),
1 bis 2 Gew.-% der Komponente (6)
enthält.

11. Mit Wasser oder organischen Lösungsmitteln verdünnte Entschäumungsmittelzubereitungen, dadurch gekennzeichnet, dass sie 1 bis 99 % des Entschäumungsmittels nach einem der Ansprüche 1 bis 10 und 99 bis 1 % Wasser oder eines organischen Lösungsmittels enthalten.

12. Verfahren zum Entschäumen wässriger Systeme, dadurch gekennzeichnet, dass man ein Entschäumungsmittel nach einem der Ansprüche 1 bis 10 bzw. die Entschäumungsmittelzubereitungen nach Anspruch 11 verwendet.

## Patentansprüche (Patentansprüche für folgende(n) Vertragsstaat(en): ES)

1. Verfahren zum Entschäumen wässriger Systeme, dadurch gekennzeichnet, dass man pro Liter wässriges System 0,1-10 g eines Entschäumungsmittels enthaltend
(1) 0,5 bis 5 Gew.-% eines Erdalkalimetallsalzes einer C₁₀-C₂₄-Fettsäure
(2) 25 bis 45 Gew.-% eines Dialkylesters einer ungesättigten Dicarbonsäure
(3) 25 bis 45 Gew.-% eines Mineralöls
(4) 5 bis 15 Gew.-% eines nichtionogenen Emulgators
(5) 5 bis 15 Gew.-% eines anionischen Emulgators und
(6) 0,5 bis 3 Gew.-% eines Alkylendiamids
bei Temperaturen von 20 bis 150°C einsetzt.

2. Verfahren gemäss Anspruch 1, worin die Komponente (1) ein Magnesiumsalz einer C₁₈-C₂₄-Fettsäure ist.

3. Verfahren gemäss Anspruch 2, worin die Komponente (1) das Magnesiumsalz der Stearinsäure ist.

4. Verfahren gemäss Anspruch 1, worin die Komponente (2) ein Dialkylester einer ethylenisch ungesättigten Dicarbonsäure mit 2 bis 12 C-Atomen je Alkylteil ist.

5. Verfahren gemäss einem der Ansprüche 1 bis 4, worin die Komponente (2) ein Dialkylester der Maleinsäure mit 8 oder 9 C-Atomen je Alkylteil ist.

6. Verfahren gemäss Anspruch 5, worin die Komponente (2) Maleinsäure-di-(2-ethyl-hexyl)-ester ist.

7. Verfahren gemäss Anspruch 6, worin die Komponente (4) ein Polyoxyethylenderivat der Fettsäureester der Ether des Sorbitans ist.

8. Verfahren gemäss Anspruch 6, worin die Komponente (5) ein Nonylphenolpolyglykoletherphosphat ist.

9. Verfahren gemäss Anspruch 8, worin die Komponente (6) das Reaktionsprodukt von Ethylendiamin mit Stearinsäure ist.

10. Verfahren gemäss einem der Ansprüche 1 bis 9, worin ein Entschäumungsmittel enthaltend
1 bis 3 Gew.-% der Komponente (1),
35 bis 40 Gew.-% der Komponente (2),
35 bis 40 Gew.-% der Komponente (3),
10 bis 15 Gew.-% der Komponente (4),
10 bis 15 Gew.-% der Komponente (5),
1 bis 2 Gew.-% der Komponente (6)
verwendet wird.

11. Verfahren gemäss einem der Ansprüche 1-10, worin mit Wasser oder organischen Lösungsmitteln verdünnte Entschäumungsmittelzubereitungen, die 1 bis 99 % des Entschäumungsmittels nach einem der Ansprüche 1 bis 10 und 99 bis 1 % Wasser oder eines organischen Lösungsmittels enthalten, verwendet werden.

## Claims (Claims for the following Contracting State(s): AT, BE, CH, DE, FR, GB, IT, LI, LU, NL)

1. An antifoam for aqueous systems, which comprises
(1) 0.5 to 5% by weight of an alkaline earth metal salt of a C₁₀-C₂₄fatty acid,
(2) 25 to 45% by weight of a dialkyl ester of an unsaturated dicarboxylic acid,
(3) 25 to 45% by weight of a mineral oil
(4) 5 to 15% by weight of a non-ionic emulsifier,
(5) 5 to 15% by weight of an anionic emulsifier and
(6) 0.5 to 3% by weight of an alkylenediamide.

2. An antifoam according to claim 1, which contains a magnesium salt of a C₁₈-C₂₄fatty acid as component (1).

3. An antifoam according to claim 2, wherein the magnesium salt of stearic acid is used as component (1).

4. An antifoam according to claim 1, which contains a dialkyl ester of an ethylenically unsaturated dicarboxylic acid having 2 to 12 C atoms in each alkyl moiety as component (2).

5. An antifoam according to any one of claims 1 to 4, which contains a dialkyl ester of maleic acid, having 8 or 9 C atoms in each alkyl moiety, as component (2).

6. An antifoam according to claim 5, which contains di-2-ethylhexyl maleate as component (2).

7. An antifoam according to claim 6, which contains a polyoxyethylene derivative of fatty acid esters of sorbitan ethers as component (4).

8. An antifoam according to claim 6, which contains a nonylphenol polyglycol ether-phosphate as component (5).

9. An antifoam according to claim 8, which contains the reaction product of ethylenediamine and stearic acid as component (6).

10. An antifoam according to any one of claims 1 to 9, which contains
1 to 3% by weight of component (1),
35 to 40% by weight of component (2),
35 to 40% by weight of component (3),
10 to 15% by weight of component (4),
10 to 15% by weight of component (5), and
1 to 2% by weight of component (6),

11. An antifoam formulation diluted with water or organic solvents, which contains 1 to 99% of an antifoam according to any one of claims 1 to 10 and 99 to 1% of water or an organic solvent.

12. A method for defoaming aqueous systems, which comprises using an antifoam according to any one of claims 1 to 10 or an antifoam formulation according to claim 11.

## Claims (Claims for the following Contracting State(s): ES)

1. A method for defoaming aqueous systems, which comprises employing, per litre of aqueous system, from 0.1-10 g of an antifoam comprising
(1) 0.5 to 5% by weight of an alkaline earth metal salt of a C₁₀-C₂₄fatty acid,
(2) 25 to 45% by weight of a dialkyl ester of an unsaturated dicarboxylic acid,
(3) 25 to 45% by weight of a mineral oil
(4) 5 to 15% by weight of a non-ionic emulsifier,
(5) 5 to 15% by weight of an anionic emulsifier and
(6) 0.5 to 3% by weight of an alkylenediamide
at temperatures of from 20 to 150°C.

2. A method according to claim 1, wherein component (1) is a magnesium salt of a C₁₀-C₂₄fatty acid.

3. A method according to claim 2, wherein component (1) is the magnesium salt of stearic acid.

4. A method according to claim 1, wherein component (2) is a dialkyl ester of an ethylenically unsaturated dicarboxylic acid having 2 to 12 C atoms in each alkyl moiety.

5. A method according to any one of claims 1 to 4, wherein component (2) is a dialkyl ester of maleic acid, having 8 or 9 C atoms in each alkyl moiety.

6. A method according to claim 5, wherein component (2) is di-2-ethylhexyl maleate.

7. A method according to claim 6, wherein component (4) is a polyoxyethylene derivative of fatty acid esters of sorbitan ethers.

8. A method according to claim 6, wherein component (5) is a nonylphenol polyglycol ether-phosphate.

9. A method according to claim 8, wherein component 6 is the reaction product of ethylenediamine and stearic acid.

10. A method according to any one of claims 1 to 9, wherein an antifoam comprising
1 to 3% by weight of component (1),
35 to 40% by weight of component (2),
35 to 40% by weight of component (3),
10 to 15% by weight of component (4),
10 to 15% by weight of component (5), and
1 to 2% by weight of component (6) is used.

11. A method according to any one of claims 1-10, wherein an antifoam formulation diluted with water or organic solvents is used which contains 1 to 99% of an antifoam of any one of claims 1 to 10 and 99 to 1% of water or an organic solvent.

## Revendications (Revendications pour l'(les) Etat(s) contractant(s) suivant(s): AT, BE, CH, DE, FR, GB, IT, LI, LU, NL)

1. Agent antimousse pour systèmes aqueux, **caractérisé** en ce qu'il contient
(1) de 0,5 à 5 % en poids d'un sel de métal alcalino-terreux d'un acide gras en C₁₀-C₂₄,
(2) de 25 à 45 % en poids d'un ester dialkylique d'un acide dicarboxylique insaturé,
(3) de 25 à 45 % en poids d'une huile minérale,
(4) de 5 à 15 % en poids d'un émulsifiant nonionogène,
(5) de 5 à 15 % en poids d'un émulsifiant anionique, et
(6) de 0,5 à 3,0 % en poids d'un alkylène-diamide.

2. Agent antimousse conforme à la revendication 1, qui contient, en tant que composant (1), un sel de magnésium d'un acide gras en C₁₈-C₂₄.

3. Agent antimousse conforme à la revendication 2, dans lequel on utilise, en tant que composant (1), du stéarate de magnésium.

4. Agent antimousse conforme à la revendication 1, qui contient, en tant que composant (2), un ester dialkylique d'un acide dicarborylique à insaturation éthylénique, comportant de 2 à 12 atomes de carbone dans chaque fragment alkyle.

5. Agent antimousse conforme à l'une quelconque des revendications 1 à 4, qui contient, en tant que composant (2), un maléate de dialkyle comportant 8 ou 9 atomes de carbone dans chaque fragment alkyle.

6. Agent antimousse conforme à la revendication 5, qui contient, en tant que composant (2), du maléate de di(2'éthyl-hexyle).

7. Agent antimousse conforme à la revendication 6, qui contient, en tant que composant (4), un dérivé polyéthoxylé d'un ester d'acide gras d'un éther de sorbitane.

8. Agent antimousse conforme à la revendication 6, qui contient, en tant que composant (5), un nonylphénol-poly(éther de glycol)-phosphate.

9. Agent antimousse conforme à la revendication 8, qui contient, en tant que composant (6), le produit de réaction de l'éthylène-diamine avec l'acide stéarique.

10. Agent antimousse conforme à l'une quelconque des revendications 1 à 9, qui contient
1 à 3 % en poids de composant (1),
35 à 40 % en poids de composant (2),
35 à 40 % en poids de composant (3),
10 à 15 % en poids de composant (4),
10 à 15 % en poids de composant (5), et
1 à 2 % en poids de composant (6).

11. Préparations d'agents antimousses diluées avec de l'eau ou des solvants organiques, **caractérisées** en ce qu'elles contiennent de 1 à 99 % d'un agent antimousse conforme à l'une des revendications 1 à 10 et de 99 à 1 % d'eau ou d'un solvant organique.

12. Procédé de démoussage de systèmes aqueux, **caractérisé** en ce que l'on utilise un agent antimousse conforme à l'une des revendications 1 à 10 ou une préparation d'agent antimousse conforme à la revendication 11.

## Revendications (Revendications pour l'(les) Etat(s) contractant(s) suivant(s): ES)

1. Procédé de démoussage de systèmes aqueux, **caractérisé** en ce que l'on utilise, par litre de système aqueux, de 0,1 à 10 g d'un agent antimousse contenant
(1) de 0,5 à 5 % en poids d'un sel de métal alcalino-terreux d'un acide gras en C₁₀-C₂₄,
(2) de 25 à 45 % en poids d'un ester dialkylique d'un acide dicarboxylique insaturé,
(3) de 25 à 45 % en poids d'une huile minérale,
(4) de 5 à 15 % en poids d'un émulsifiant nonionogène,
(5) de 5 à 15 % en poids d'un émulsifiant anionique, et
(6) de 0,5 à 3,0 % en poids d'un alkylène-diamide,
à des températures situées entre 20 et 150°C.

2. Procédé conforme à la revendication 1, dans lequel le composant (1) est un sel de magnésium d'un acide gras en C₁₈-C₂₄.

3. Procédé conforme à la revendication 2, dans lequel le composant (1) est du stéarate de magnésium.

4. Procédé conforme à la revendication 2, dans lequel le composant (2) est un ester dialkylique d'un acide dicarboxylique à insaturation éthylénique, comportant de 2 à 12 atomes de carbone dans chaque fragment alkyle.

5. Procédé conforme à l'une des revendications 1 à 4, dans lequel le composant (2) est un maléate de dialkyle comportant 8 ou 9 atomes de carbone dans chaque fragment alkyle.

6. Procédé conforme à la revendication 5, dans lequel le composant (2) est du maléate de di(2-éthyl-hexyle).

7. Procédé conforme à la revendication 6, dans lequel le composant (4) est un dérivé polyéthoxylé d'un ester d'acide gras d'éther de sorbitane.

8. Procédé conforme à la revendication 6, dans lequel le composant (5) est un nonylphénol-poly(éther de glycol)-phosphate.

9. Procédé conforme à la revendication 8, dans lequel le composant (6) est le produit de réaction de l'éthylène-diamine avec l'acide stéarique.

10. Procédé conforme à l'une des revendications 1 à 9, dans lequel on utilise un agent antimousse contenant
1 à 3 % en poids de composant (1),
35 à 40 % en poids de composant (2),
35 à 40 % en poids de composant (3),
10 à 15 % en poids de composant (4),
10 à 15 % en poids de composant (5), et
1 à 2 % en poids de composant (6).

11. Procédé conforme à l'une des revendications 1 à 10, dans lequel on utilise des préparations d'agent antimousse diluées avec de l'eau ou des solvants organiques, qui contiennent de 1 à 99 % d'un agent antimousse indiqué dans l'une des revendications 1 à 10 et de 99 à 1 % d'eau ou d'un solvant organique.
